# EUROPÄISCHE PATENTANMELDUNG

(11) **EP 1 333 407 A2**
(43) Veröffentlichungstag der Anmeldung: **06.08.2003**
(21) Anmeldenummer: 02028042.6
(22) Anmeldetag: 16.12.2002
(51) Int. Cl.: G07F 7/10, G07F 19/00

(54) **Elektronisches Zahlungstransferverfahren**

(30) Priorität: 31.01.2002 DE 10203705
(71) Anmelder: Giesecke & Devrient GmbH, 81677 München (DE)
(72) Erfinder: Johne, Andreas, 82194 Gröbenzell (DE)

(57) **Zusammenfassung**

Ein Zahlungsverkehrsterminal 3, insbesondere Geldautomat oder Kassensystem, ist mit einem vom Zahlungsverkehrsterminal entfernt aufgestellten Vorterminal 2 datenübertragungstechnisch verbunden. Eine Authorisierung zur Benutzung eines für den elektronischen Zahlungstransfer bestimmten Datenträgers 1 erfolgt am Vorterminal 2. Dadurch wird der in Stoßzeiten bisweilen zeitaufwendige Online-Authorisierungsprozeß vorverlagert, so daß sich keine Schlangen vor dem Zahlungsverkehrsterminal bilden.

## Beschreibung

Die Erfindung betrifft ein elektronisches Zahlungstransferverfahren und insbesondere ein Verfahren zur Authorisierung eines elektronischen Zahlungsvorgangs unter Verwendung eines Datenträgers sowie ein System zur Durchführung der Verfahren.

Der bargeldlose Zahlungstransfer erfolgt heutzutage häufig elektronisch unter Verwendung spezieller Ausweiskarten. Als Beispiele seien hier das Abheben oder Einzahlen von Geldbeträgen an einem Geldautomaten oder Zahlungsvorgänge im Einzelhandel und anderen sogenannten Point-Off-Sales (POS) mittels Kredit-, Scheck-, Geld-, Kunden- oder anderen Zahlungskarten genannt. Die Karten, üblicherweise in Form von Magnetstreifenkarten oder Chipkarten, dienen dabei als Berechtigungsnachweis gegenüber dem Geldautomaten bzw. POS und enthalten weitere Daten, wie z.B. die Bankverbindung oder dergleichen.

Um nur dem berechtigten Eigentümer der Karte ihre Benutzung zu ermöglichen, erfolgt ein PIN-Vergleich. Dazu führt der Benutzer die Karte in ein geeignetes Terminal ein, gibt seine persönliche, nur ihm bekannte PIN ein und es wird ein Vergleich der eingegebenen PIN mit einer auf der Karte oder im Hintergrundsystem gespeicherten PIN durchgeführt. Nur bei Vorliegen eines positiven Prüfungsergebnisses wird die Benutzung der Karte und damit der elektronische Zahlungstransfer authorisiert.

Im Falle von Chipkarten erfolgt die PIN-Prüfung vergleichsweise schnell in dem Chip selbst. In anderen Fällen wird die PIN-Prüfung in Hintergrundsystemen online abgewickelt, beispielsweise über eine Online-Verbindung zu dem Kreditinstitut, die die Karte ausgegeben hat, oder einem von dieser Institution authorisierten Dienstleister. Selbst in Fällen, in denen die PIN-Prüfung typischerweise offline abgewickelt wird, wird dann doch häufig eine Online-Abwicklung notwendig, beispielsweise um vor der Authorisierung die Bonität zu prüfen und ggf. einen Kreditrahmen vorzugeben.

Die Online-Abwicklung der PIN-Prüfung ist mit einer Zeitverzögerung verbunden, die gerade in Hochbetriebszeiten zu längeren Wartezeiten führen kann. Gerade bei Einzelhandels-POS und stark frequentierten Geldautomaten beispielsweise im Innenstadtbereich ist aber eine Zahlungsabwicklung im Bereich von Sekunden erforderlich, um Schlangen vor dem Zahlungsverkehrsterminal zu vermeiden.

Aus der PS 30 41 109 C2 ist es bekannt, die Authorisierung des Benutzers gegenüber der von ihm verwendeten Karte mittels PIN zeitlich vor dem eigentlichen Zahlungsvorgang abzuwickeln. Dazu dient ein Taschenterminal, das der Benutzer mit sich führt. Die PIN wird in das Taschenterminal eingegeben, und das Taschenterminal vergleicht die PIN mit dem auf der Karte gespeicherten Referenz-PIN. Bei positivem Prüfungsergebnis wird die Karte für einen vorgegebenen Zeitraum für etwaige Transaktionen freigeschaltet. Wenn der Benutzer dann mit der freigeschalteten Karte beispielsweise an einem Geldautomaten eine Transaktion durchführen möchte, braucht er die PIN nicht erneut einzugeben. So kann die PIN nicht ausgespäht werden, und der Benutzer wird auch nicht unter Zeitdruck stehend möglicherweise eine falsche PIN eingeben.

Auf diese Weise verringert sich auch der Zeitbedarf für die Durchführung des elektronischen Zahlungsvorgangs, da die PIN nicht erneut geprüft werden muß. Diese Zeitersparnis stellt sich aber in den Fällen nicht ein, in denen die PIN-Prüfung oder andere für die Authorisierung relevante Datentransfers online abgewickelt werden müssen. Außerdem ist der eingesparte Zeitaufwand bei der Offline-Prüfung der PIN unbedeutend im Vergleich zu dem viel größeren Zeitaufwand bei der Online-Prüfung eines PINs.

Der Erfindung liegt daher die Aufgabe zugrunde, einen schnellen aber gesicherten elektronischen Zahlungstransfer auch dann zu gewährleisten, wenn die Hintergrundsysteme aufgrund eines erhöhten Zahlungstransferaufkommens besonders ausgelastet sind.

Dementsprechend erfolgt die Authorisierung nicht erst während der Durchführung des Zahlungstransfers am Zahlungsverkehrsterminal (POS oder Geldautomat), sondern bereits zu einem früheren Zeitpunkt an einem Vorterminal, das mit dem Zahlungsverkehrsterminal datenübertragungstechnisch verbunden ist. Die Datenübertragung kann kontaktlos beispielsweise über einen IR-Sender oder über eine elektrische Leitungsverbindung erfolgen.

Diese Lösung bietet verschiedene Vorteile. Einerseits gestattet sie es in den Fällen, in denen die Authorisierung anhand des PINs im Vorterminal nicht abschließend möglich ist, die Abwicklung online durchzuführen unter Rückgriff auf Daten aus einem mit dem Zahlungsverkehrsterminal oder dem Vorterminal verbundenen Hintergrundsystem. Die Vorauthorisierung an dem Vorterminal führt also immer zu einem eindeutig positiven oder negativen Authorisierungsergebnis, unabhängig davon, ob der PIN-Vergleich offline oder online abgewickelt wird.

Bei dem Hintergrundsystem kann es sich beispielsweise im Falle von einfachen Kundenkarten um ein zentrales Datenverarbeitungssystem des Händlers und im Falle von Scheck- und Kreditkarten um ein entsprechendes Datenverarbeitungssystem eines Kreditinstituts handeln.

Ein weiterer Vorteil besteht in der Möglichkeit, die bei der Authorisierung gewonnenen Daten, wie beispielsweise die Legitimation des Kunden zur Benutzung der Karte, ein möglicher Verfügungsrahmen, die Bankverbindung und dergleichen in einem Speicher des Zahlungsverkehrsterminals zu speichern, so daß diese Informationen, die bei üblichen Zahlungstransferverfahren erst im zeitaufwendigen Online-Prozeß geprüft und/oder angefordert werden müssen, dem Zahlungsverkehrsterminal zum Zeitpunkt des Zahlungsvorgangs bereits unmittelbar vorliegen.

Die Vorauthorisierung kann beispielsweise bereits beim Betreten der jeweiligen Räumlichkeiten oder im üblichen Warteschlangenbereich vor einer Kasse an einem geeigneten Vorterminal durchgeführt werden. Der Benutzer erhält dadurch eine grundsätzliche Zustimmung für eine sichere Zahlung durch Freischaltung seiner Karte. Diese Freischaltung ist vorzugsweise zeitlich beschränkt und auf einen Höchstbetrag limitiert. Beim anschließenden Zahlungsvorgang wird lediglich die Vorauthorisierung registriert, ohne daß der Kunde noch einmal seine PIN angeben muß. Die Zahlung kann sofort erfolgen, und mit der Zahlung endet dann gleichzeitig die Gültigkeit der Vorauthorisierung.

Anstelle einer auf PIN basierenden Vorauthorisierung kann die Vorauthorisierung auch anhand eines anderen geheimen Codes oder eines sonstigen eindeutigen Identifikationsmerkmals, beispielsweise eines Fingerprints, durchgeführt werden.

Als Ergebnis der Vorauthorisierung erstellt das Vorterminal, gemäß einer bevorzugten Ausführungsform der Erfindung, einen gedruckten oder einen elektronischen Beleg über die Vorauthorisierung, der dem Zahlungsverkehrsterminal bei dem nachfolgenden elektronischen Zahlungstransfer als Nachweis für die Authorisierung dient. Im Falle eines Druckbelegs können die Belegdaten ausschließlich oder zusätzlich zu Klartextdaten in einem maschinenlesbaren Barcode gedruckt sein. Der Druckbeleg wird dann bei der Zahlungstransaktion vorgelegt und gegebenenfalls eingescannt oder über eine Tastatur eingegeben, und die Transaktion kann unmittelbar erfolgen.

Der Beleg kann lediglich eine Kennummer tragen, er kann aber auch alle für die Durchführung des elektronischen Zahlungsvorgangs relevanten Daten enthalten, so daß die Karte selbst nicht noch einmal gelesen werden muß. Vorzugsweise wird aber die Karte selbst noch einmal ins Zahlungsverkehrsterminal eingeführt und für den Zahlungsvorgang benutzt, um zumindest die Gültigkeit der Vorauthorisierung zu sperren.

Der Beleg über die Vorauthorisierung wird gemäß einer bevorzugten Ausführungsform von dem Vorterminal in elektronischer Form ausgegeben und auf einem beliebigen elektronischen Datenträger gespeichert, beispielsweise auf einer Kundenkarte mit Magnetstreifen, einem Handy, einer Chipkarte oder einem drahtlosen Transponder. Vorzugsweise wird der Beleg auf demselben Datenträger gespeichert, der vom Benutzer zur Vorauthorisierung verwendet wurde. In diesem Falle wird derselbe Datenträger für die Vorauthorisierung und für den späteren Zahlungsvorgang verwendet, wobei jedoch bei dem späteren Zahlungsvorgang lediglich Daten vom Datenträger gelesen werden, ohne daß eine erneute Online-Prüfung notwendig ist.

Andererseits kann der Beleg auch zusätzlich oder ausschließlich im Hintergrundsystem des Zahlungsverkehrsterminals gespeichert werden.

Wenn der Benutzer seine freigeschaltete Karte dann zum Zwecke des Zahlungsvorgangs ins Zahlungsverkehrsterminal einführt, werden die im Hintergrundsystem gespeicherten Belegdaten ohne Zeitverzögerung dieser betreffenden Karte zugeordnet und der Zahlungsvorgang kann sofort erfolgen.

Vorzugsweise wird der Zeitpunkt der Vorauthorisierung in dem Datenträger und/oder auf dem Beleg ausgewiesen. Dadurch kann die Gültigkeit der Vorauthorisierung zeitlich begrenzt werden, so daß bei Verlust des Datenträgers und/oder Belegs kein Mißbrauch damit getrieben werden kann.

Desweiteren ist es vorteilhaft, wenn der Beleg diejenige Instanz identifiziert, die den Beleg ausgestellt hat, beispielsweise also ein spezielles Einzelhandelsunternehmen. Es können dann auch mehrere Vorauthorisierungen durchgeführt werden, die sich zeitlich überschneiden und die je nach ausstellender Instanz unterschiedliche Rahmenbedingungen haben können, beispielsweise unterschiedliche Verfügungsrahmen. Anhand der der jeweiligen Vorauthorisierung zugeordneten Instanz wird vermieden, daß Vorauthorisierungen, die gleichzeitig Gültigkeit besitzen, vermischt werden. Die ausstellende Instanz ist dann über eine Händlernummer oder eine Vorterminal-Identifikationsnummer oder ein anderes eindeutiges Merkmal identifizierbar.

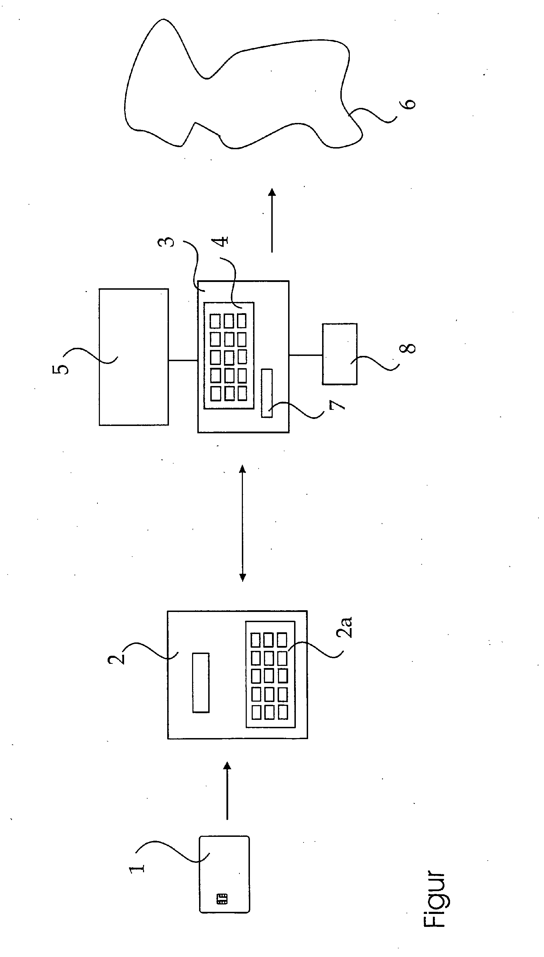

Nachfolgend wird die Erfindung beispielhaft anhand einem in der einzigen Figur dargestellten, bevorzugten Ausführungsbeispiel erläutert.

Dementsprechend führt ein Benutzer einen Datenträger 1 in Form einer Chipkarte in ein Vorterminal 2 ein. In dem Vorterminal erfolgt die Vorauthorisierung durch Vergleich einer in der Chipkarte 1 gespeicherten PIN mit einer vom Benutzer auf der Tastatur 2a des Vorterminals 2 eingegebenen PIN. Sofern keine weiteren Informationen für eine spätere Zahlungstransaktion erforderlich sind, wenn also insbesondere der verfügbare Kreditrahmen eindeutig feststeht, wird die Chipkarte 1 für einen vorbestimmten Zeitraum freigeschaltet. Dieser Zeitraum kann beispielsweise 5 Minuten betragen, wenn das Vorterminal 2 im Warteschlagenbereich zu einem Kassensystem aufgestellt ist, oder eine halbe Stunde, wenn das Vorterminal 2 am Eingang eines Geschäftslokals aufgestellt ist.

Ein Beleg über die Vorauthorisierung wird dann von dem Vorterminal 2 über elektrische Leitungen oder drahtlos an ein Zahlungsverkehrsterminal 3 übertragen und dort gespeichert. Er kann aber auch im Vorterminal 2 gespeichert bleiben und bei Bedarf vom Zahlungsverkehrsterminal 3 abgerufen werden. Zusätzlich oder alternativ kann der Beleg auf der Chipkarte gespeichert werden.

Falls eine Vorauthorisierung durch das Vorterminal 2 nicht ohne weiteres möglich ist, weil beispielsweise der Verfügungsrahmen des Kunden online durch Rückfrage beim betreffenden Kreditinstitut zuvor bestätigt werden muß, so erfolgt eine Online-Verbindung vom Vorterminal 2 über das Zahlungsverkehrsterminal 3 zum betreffenden Kreditinstitut oder einem anderen Hintergrundsystem 6, und erst wenn alle notwendigen Informationen zur Freischaltung der Chipkarte 1 vorliegen, wird die Chipkarte 1 vom Vorterminal 2 freigeschaltet und ein entsprechender Beleg ausgestellt.

Zur Durchführung der nachfolgenden Zahlungstransaktion wird die freigeschaltete Chipkarte 1 in den Schacht 7 des Zahlungsverkehrsterminals 3 eingeführt und der Zahlungsvorgang kann sofort beginnen. Die Karte wird beispielsweise anhand ihrer Kartennummer oder einer Kontonummer oder anhand von sonstigen eindeutigen Daten der Karte identifiziert und es wird anhand der Belegdaten, die auf der Karte, auf einem separaten Beleg oder im Speicher des Zahlungsverkehrsterminals vorliegen, festgestellt, daß die Karte freigeschaltet ist und gegebenenfalls für welchen Zeitraum und Verfügungsrahmen die Freischaltung gilt. Innerhalb dieses Verfügungsrahmens erfolgt dann die Transaktion. Falls die Freischaltung wegen Zeitüberschreitung zwischenzeitlich gesperrt wurde, erfolgt eine erneute Freischaltung durch das Zahlungsverkehrsterminal 3 selbst.

Falls die Belegdaten nicht im Händlersystem gespeichert sind sondern auf einem Druckbeleg vorliegen, werden die Belegdaten entweder händisch über Tastatur 4 und Bildschirm 5 eingegeben oder mittels einem Scanner 8 eingelesen.

Der Zahlungsvorgang selbst wird vorzugsweise online abgewickelt, kann aber auch zeitverzögert zusammen mit den Authorisierungsdaten zunächst offline abgewickelt werden, und der online-Zahlungstransfer erfolgt später, wenn das online-Verkehrsaufkommen geringer ist.

## Patentansprüche

1. Verfahren zum Authorisieren der Benutzung eines Datenträgers (1), der für die Durchführung eines elektrischen Zahlungsvorgangs verwendbar ist, umfassend die Schritte:
- Angeben eines Identifikationsmerkmals,
- Prüfen des Identifikationsmerkmals anhand von Referenzdaten,
- bei positivem Prüfungsergebnis, Freigeben des Datenträgers für die Durchführung eines elektronischen Zahlungsvorgangs,
wobei diese Authorisierung an einem Vorterminal (2) durchgeführt wird, welches einem für die Durchführung des elektronischen Zahlungsvorgangs bestimmten Zahlungsverkehrsterminal (3) vorgeschaltet ist, **dadurch gekennzeichnet, daß** das Vorterminal (2) datenübertragungstechnisch mit dem Zahlungsverkehrsterminal (3) in Verbindung steht, wobei für die Durchführung der Authorisierung benötigte Daten vom Zahlungsverkehrsterminal (3) zum Vorterminal (2) und/oder für die Durchführung des elektronischen Zahlungsvorgangs relevante Daten vom Vorterminal (2) zum Zahlungsverkehrsterminal (3) übertragen werden.

2. Verfahren nach Anspruch 1, wobei die Authorisierung auf Basis eines online-Datentransfers zwischen dem Vorterminal und einem Hintergrundsystem des Zahlungsverkehrsterminals oder Vorterminals durchgeführt wird, falls die Authorisierung anhand des PINs im Vorterminal nicht abschließend möglich ist.

3. Verfahren nach Anspruch 1 oder 2, wobei das Zahlungsverkehrsterminal Teil eines Geldautomats ist.

4. Verfahren nach Anspruch 1 oder 2, wobei das Zahlungsverkehrsterminal Teil eines Kassensystems ist.

5. Verfahren nach einem der Ansprüche 1 bis 4, wobei die Authorisierung durch das Vorterminal mit zeitlich begrenzter Gültigkeit erfolgt.

6. Verfahren nach einem der Ansprüche 1 bis 5, wobei das Vorterminal einen Beleg über die durchgeführte Authorisierung erstellt, der dem Zahlungsverkehrsterminal vor der Durchführung eines nachfolgenden elektronischen Zahlungsvorgangs als Nachweis für die Authorisierung zur Verfügung gestellt wird.

7. Verfahren nach Anspruch 6, wobei der Beleg als Druckbeleg erstellt wird.

8. Verfahren nach Anspruch 7, wobei der Druckbeleg einen maschinenlesbaren Barcode umfaßt.

9. Verfahren nach einem der Ansprüche 6 bis 8, wobei der Beleg als elektronischer Beleg erstellt wird.

10. Verfahren nach Anspruch 9, wobei der elektronische Beleg in einem Speicher gespeichert wird, auf den das Zahlungsverkehrsterminal zugreifen kann.

11. Verfahren nach Anspruch 9 oder 10, wobei der elektronische Beleg auf dem Datenträger gespeichert wird.

12. Verfahren nach einem der Ansprüche 6 bis 11, wobei der Beleg für die Durchführung des elektronischen Zahlungsvorgangs relevante Daten enthält.

13. Verfahren nach einem der Ansprüche 6 bis 12, wobei der Beleg Daten über den Zeitpunkt der Authorisierung enthält.

14. Verfahren nach einem der Ansprüche 6 bis 13, wobei der Beleg Daten über die die Authorisierung durchführende Instanz enthält.

15. Elektronisches Zahlungstransferverfahren umfassend ein Authorisierungsverfahren nach einem der Ansprüche 1 bis 14 an einem mit einem Zahlungsverkehrsterminal verbundenen Vorterminal unter Verwendung eines Datenträgers, wobei bei dem Authorisierungsverfahren gewonnene, für den Zahlungsvorgang relevante Daten in einem Speicher gespeichert werden, auf den das Zahlungsverkehrsterminal zugreifen kann, und wobei dem Zahlungsverkehrsterminal eindeutige Datenträger- oder Belegdaten zugeführt werden, denen die im Speicher gespeicherten relevanten Daten zugeordnet werden, um den elektronischen Zahlungsvorgang zu veranlassen.

16. Verfahren nach Anspruch 15, wobei der elektronische Zahlungsvorgang zeitlich beabstandet von der Zuführung der eindeutigen Datenträger- oder Belegdaten veranlaßt wird.

17. System umfassend ein Zahlungsverkehrsterminal (3) zur Durchführung eines elektronischen Zahlungsvorgangs und ein Vorterminal (2), an welchem eine Authorisierung zur Benutzung eines für den elektronischen Zahlungsvorgang verwendeten Datenträgers (1) durchführbar ist, **dadurch gekennzeichnet, daß** das Vorterminal (2) mit dem Zahlungsverkehrsterminal (3) datenübertragungstechnisch verbunden ist.

18. System nach Anspruch 17, wobei das Zahlungsverkehrsterminal Teil eines Geldautomats ist.

19. System nach Anspruch 17, wobei das Zahlungsverkehrsterminal Teil eines Kassensystems ist.

20. System nach einem der Ansprüche 17 bis 19, wobei das Vorterminal bei erfolgter Authorisierung einen Authorisierungsbeleg ausgibt.

21. System nach Anspruch 20, wobei der Authorisierungsbeleg in gedruckter Form ausgegeben wird.

22. System nach Anspruch 21, wobei der gedruckte Authorisierungsbeleg einen Barcode umfaßt.

23. System nach Anspruch 21 oder 22, umfassend eine mit dem Zahlungsverkehrsterminal datenübertragungstechnisch verbundene Einrichtung zum automatischen Lesen des gedruckten Authorisierungsbelegs.

24. System nach einem der Ansprüche 20 bis 23, wobei der Authorisierungsbeleg in elektronischer Form ausgegeben wird.

25. System nach Anspruch 24, umfassend einen Speicher, auf den vom Zahlungsverkehrsterminal zugegriffen werden kann, und in dem der elektronische Authorisierungsbeleg gespeichert wird.

26. System nach Anspruch 24 oder 25, wobei der elektronische Authorisierungsbeleg auf dem für den Zahlungsvorgang authorisierten Datenträger gespeichert wird.
